# EUROPEAN PATENT APPLICATION

(11) **EP 4 246 774 A1**
(43) Date of publication of application: **20.09.2023**
(21) Application number: 21898148.8
(22) Date of filing: 29.11.2021
(51) Int. Cl.: H02K 1/2706

(54) **ELECTRIC MOTOR**

(30) Priority: 30.11.2020 JP 2020198347
(71) Applicant: Mitsubishi Heavy Industries Thermal Systems, Ltd., Tokyo, 100-8332 (JP)
(72) Inventor: HOTTA, Yohei, Tokyo 100-8332 (JP); SASAKI, Mikito, Tokyo 100-8332 (JP); SAKAGUCHI, Ayana, Tokyo 100-8332 (JP)
(74) Representative: Cabinet Beau de Loménie
(86) International application number: PCT/JP2021/043589
(87) International publication number: WO 2022/114176

(57) **Abstract**

An electric motor comprising: a rotor core in a disc shape centered around the axis; a plurality of permanent magnets arranged inside the rotor core in the circumferential direction; and a stator surrounding the rotor core and the permanent magnets from the outer peripheral side, wherein a plurality of outer-side slits extending in such directions that the outer-side slits become closer to each other as the positions approach from both ends in the circumferential direction toward the outside in the radial direction are formed on the outer peripheral side of the permanent magnets in the rotor core. This enables reduction in leakage magnetic flux.

## Description

### Technical Field

The present disclosure relates to an electric motor.

Priority is claimed on Japanese Patent Application No. 2020-198347 filed on November 30, 2020, the content of which is incorporated herein by reference.

### Background Art

A permanent magnet synchronous motor (PMSM) that includes a rotor which has a permanent magnet and a stator which covers the rotor from an outer peripheral side is known as a type of an electric motor. Specific examples of this type of electric motor include a device described in PTL 1 below. In the electric motor according to PTL 1, a permanent magnet is embedded in a rotor core, and an arc-shaped slit extending along a magnetic path of the permanent magnet is formed inside the rotor core. Accordingly, the reluctance torque of the electric motor is reduced, and torque ripple and noise can be reduced. Citation List

### Patent Literature

[PTL 1] Japanese Unexamined Patent Application Publication No. 2006-166688

### Summary of Invention

### Technical Problem

However, as in the electric motor described in PTL 1 above, in a case where the slit has a simple arc shape, a flow of magnetic flux from the permanent magnet to the stator is obstructed, and magnetic flux leakage increases. As a result, there is a possibility in which torque and efficiency of a motor are affected.

The present disclosure is devised in order to solve the problems, and an object thereof is to provide an electric motor with further improved torque and efficiency. Solution to Problem

According to an aspect of the present disclosure, in order to solve the problems, there is provided an electric motor including a rotor core that has a disk shape centered around an axis, a plurality of permanent magnets that are arranged in a circumferential direction inside the rotor core, and a stator that surrounds the rotor core and the permanent magnets from an outer peripheral side, in which a plurality of outer slits that extend in directions in which the outer slits become closer to each other from both ends of the permanent magnets in the circumferential direction toward a radial outer side are formed in the rotor core on the outer peripheral side of the permanent magnet.

### Advantageous Effects of Invention

With the present disclosure, an electric motor with further improved torque and efficiency can be provided. Brief Description of Drawings

Fig. 1 is a sectional view of an electric motor according to a first embodiment of the present disclosure.
Fig. 2 is an enlarged sectional view of main parts of the electric motor according to the first embodiment of the present disclosure.
Fig. 3 is an enlarged sectional view of main parts of an electric motor according to a second embodiment of the present disclosure.
Fig. 4 is an enlarged sectional view of main parts showing a modification example of the electric motor according to each embodiment of the present disclosure. Description of Embodiments

### [First Embodiment]

### (Configuration of Electric Motor)

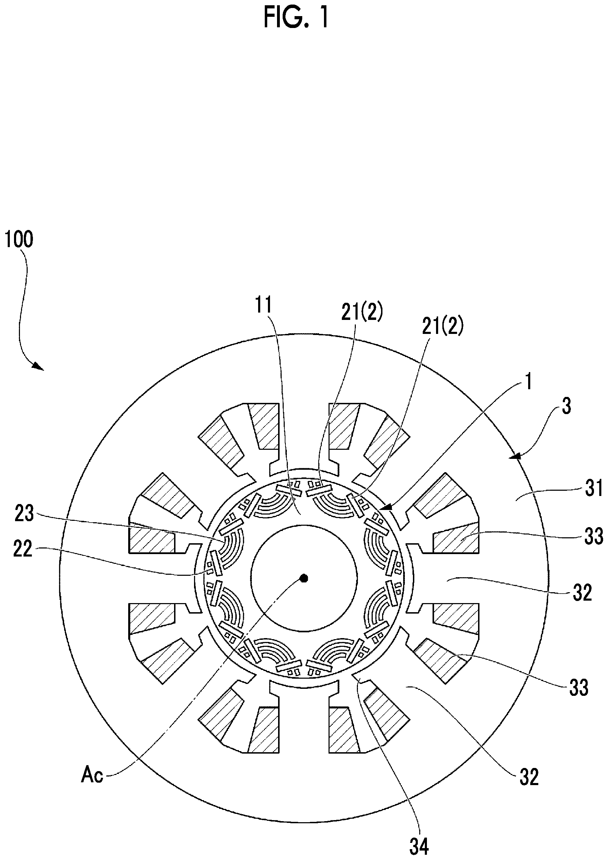

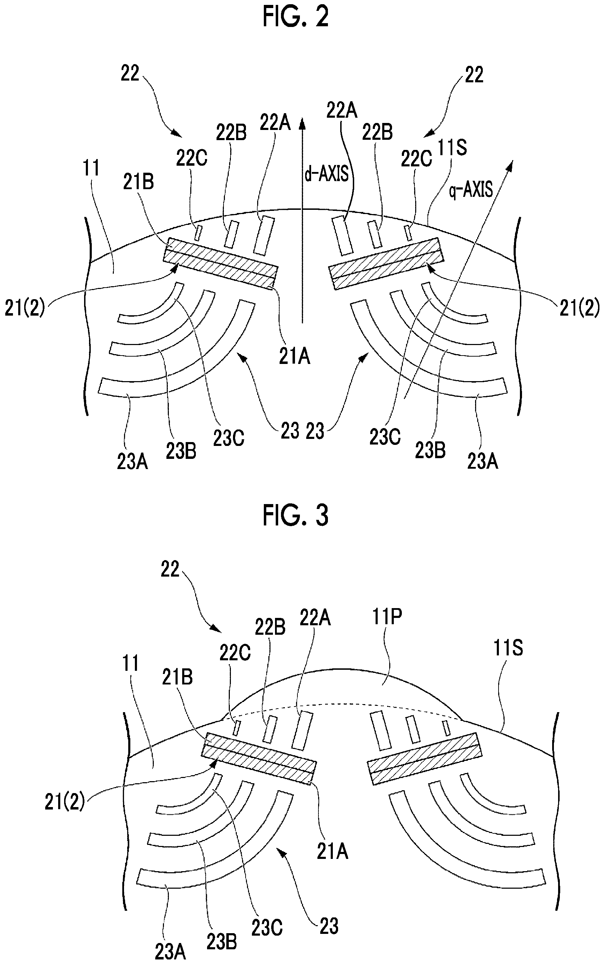

Hereinafter, an electric motor 100 according to a first embodiment of the present disclosure will be described with reference to Figs. 1 and 2. As shown in Fig. 1, the electric motor 100 includes a rotor 1 that extends along an axis Ac and a stator 3 that covers the rotor 1 from an outer peripheral side.

### (Configuration of Rotor)

The rotor 1 has a rotor core 11 and a permanent magnet 2. The rotor core 11 has a cylindrical shape centered around the axis Ac. Although not shown in detail, the rotor core 11 has a cylindrical shape as a whole by stacking a plurality of steel panels formed in a thin plate shape.

A plurality of permanent magnets 2 are embedded in the rotor core 11. More specifically, the permanent magnets 2 are arranged at intervals in a circumferential direction with respect to the axis Ac. Each permanent magnet 2 has a pair of unit magnets 21. Each unit magnet 21 has a plate shape having a rectangular sectional shape when viewed from an axis Ac direction. One permanent magnet 2 is formed by disposing the unit magnets 21 to be adjacent to each other in the circumferential direction. Details of the disposition and posture of the unit magnet 21 will be described later.

### (Configuration of Stator)

The stator 3 has a back yoke 31, teeth 32, coils 33, and tips of teeth 34. The back yoke 31 has an annular shape centered around the axis Ac. An outer peripheral surface of the back yoke 31 is fixed to an inner peripheral surface of a casing (not shown). A plurality of teeth 32 are provided on an inner peripheral side of the back yoke 31. The teeth 32 are arranged along the inner peripheral surface of the back yoke 31 at equal intervals in the circumferential direction of the axis Ac. Each of the teeth 32 protrudes toward a radial inner side from the inner peripheral surface of the back yoke 31.

End portions of the teeth 32 on the radial inner side are the tips of teeth 34. The tips of teeth 34 overhang from the teeth 32 to both sides in the circumferential direction. In addition, the coils 33 are provided around the teeth 32. The coils 33 are formed by winding copper wires or the like around the teeth 32 a plurality of times. The coils 33 are excited by passing currents through the coils 33. The rotor 1 rotates around the axis Ac due to an electromagnetic force generated between the coils 33 and the permanent magnets 2.

### (Configuration and Disposition of Unit Magnets)

Next, a detailed configuration of the rotor core 11 will be described with reference to Fig. 2. As shown in Fig. 2, the pair of unit magnets 21 forming the permanent magnet 2 extend in directions in which the unit magnets are separated away from each other in the circumferential direction from the radial inner side to a radial outer side. That is, the unit magnets 21 are disposed in an inclined posture with respect to a radial direction.

Poles of surfaces facing the radial outer side are the same between the pair of unit magnets 21. On the other hand, poles of the permanent magnets 2 adjacent to each other are different from each other. That is, the permanent magnets 2 are arranged such that N poles and S poles alternate in the circumferential direction.

Further, the unit magnet 21 has a variable magnet 21A that is relatively positioned on the radial inner side and a fixed magnet 21B that is laid up on the radial outer side of the variable magnet 21A. The variable magnet 21A can change a magnetic force by magnetization or demagnetization. On the other hand, the fixed magnet 21B has a constant magnetic force. By controlling an energizing current of the coil 33, the magnetic force of the variable magnet 21A changes, and it becomes possible to change the torque and efficiency of the electric motor 100.

### (Configuration of Outer Slit)

A plurality of slits (outer slits 22 and inner slits 23) are formed in the rotor core 11 in order to guide magnetic flux generated from the permanent magnet 2 (unit magnet 21). The outer slits 22 are formed on the radial outer side of the unit magnet 21. For example, six outer slits 22 are formed at intervals in the circumferential direction. That is, three outer slits 22 are formed for each unit magnet 21.

The outer slits 22 extend in directions in which the outer slits become closer to each other from both ends of the unit magnets 21 in the circumferential direction toward the radial outer side. In addition, the outer slits 22 extend linearly in a direction orthogonal to an outer surface (a surface facing the radial outer side) of the unit magnet 21. The term "orthogonal" herein represents a substantially orthogonal state, and design tolerances and manufacturing errors are allowed.

Further, the closer the outer slit 22, among the six outer slits 22, is positioned to a central portion of the permanent magnet 2 in the circumferential direction, the larger the width becomes. That is, in a case where a gap between the pair of unit magnets 21 is used as reference, a first outer slit 22A closest to the gap in the circumferential direction is wider than a third outer slit 22C positioned on the outermost side in the circumferential direction. In addition, a second outer slit 22B formed between the first outer slit 22A and the third outer slit 22C is wider than the third outer slit 22C and is narrower than the first outer slit 22A. The term "width" herein refers to a dimension in a plane direction orthogonal to a direction in which the outer slit 22 extends.

### (Configuration of Inner Slit)

A plurality of inner slits 23 are formed on the radial inner side of the permanent magnet 2. For example, six inner slits 23 are formed at intervals in the circumferential direction. That is, three inner slits 23 are formed for each unit magnet 21.

As shown in Fig. 1 or 2, the inner slits 23 extend in a curved shape from a permanent magnet 2 on one side (unit magnet 21), among the pair of permanent magnets 2 adjacent to each other in the circumferential direction, toward a permanent magnet 2 on the other side (unit magnet 21). That is, the plurality of arc-shaped inner slits 23 are formed on the radial inner side of the permanent magnet 2.

Further, the closer the inner slit 23, among the inner slits 23, is positioned to the radial outer side, the smaller the width becomes. That is, a first inner slit 23A positioned on a radial innermost side is wider than a third inner slit 23C positioned on a radial outermost side. In addition, a second inner slit 23B formed between the first inner slit 23A and the third inner slit 23C is wider than the third inner slit 23C and is narrower than the first inner slit 23A. The term "width" herein refers to a dimension in a plane direction orthogonal to a direction in which the inner slit 23 extends.

### (Effects)

With the configuration, the plurality of outer slits 22 are formed in the rotor core 11 on the outer peripheral side of the permanent magnet 2. Further, the outer slits 22 extend in the directions in which the outer slits become closer to each other toward the radial outer side. Since the outer slit 22 is a gap, the magnetic resistance of the outer slit is larger than the magnetic resistance of the rotor core 11 itself. For this reason, magnetic flux generated by the permanent magnet 2 is guided in the direction in which the outer slit 22 extends while avoiding the outer slit 22. In other words, the magnetic flux is guided in the directions in which the outer slits become closer to each other toward the radial outer side. Accordingly, the magnetic flux can be converged toward the teeth 32 of the stator 3. As a result, leakage magnetic flux can be further reduced.

Herein, as shown in Fig. 2, a direction along the magnetic field of the permanent magnet 2 is defined as a d-axis, and a direction orthogonal to the d-axis is defined as a q-axis. There is a demand for decreasing a magnetic resistance in a d-axis direction in order to increase reluctance torque. In the configuration, the closer an outer slit, among the plurality of outer slits 22, is positioned to the central portion of the permanent magnet 2 in the circumferential direction, the larger the width of the outer slit 22 becomes. In other words, a proportion occupied by the rotor core 11 itself decreases toward the central portion in the circumferential direction. Accordingly, the width of a magnetic path at the central portion in the circumferential direction can be decreased, and a magnetic resistance (that is, a magnetic resistance in the d-axis direction described above) can be further decreased. As a result, it becomes possible to increase the reluctance torque or to more smoothly perform the demagnetization or magnetization of the permanent magnet 2.

Further, since the width of the outer slit 22 is small on both end sides of the permanent magnet 2 in the circumferential direction, a proportion occupied by the rotor core 11 itself is large. Accordingly, the strength of the rotor core 11 can be ensured. In addition, by increasing a proportion occupied by the rotor core 11 itself as described above, magnetic saturation can be made unlikely to occur.

In addition, with the configuration, the pair of unit magnets 21 extend toward the radial outer side in the directions in which the unit magnets are separated away from each other in the circumferential direction. That is, each of the unit magnets 21 faces the central portion in the circumferential direction. For this reason, the direction in which the outer slit 22 extends and a direction of magnetic flux generated by the unit magnets 21 can be brought closer to each other. As a result, leakage magnetic flux can be further reduced.

In addition, with the configuration, the outer slits 22 extend linearly in the direction orthogonal to the outer surface of the unit magnet 21. That is, the direction of magnetic flux generated by the unit magnets 21 and the direction in which the outer slit 22 extends can be brought even closer to each other. As a result, leakage magnetic flux can be further reduced effectively.

Further, with the configuration, the closer the inner slit 23, among the plurality of inner slits 23, is positioned to the radial outer side, the smaller the width becomes. Accordingly, a magnetic resistance in a q-axis direction can be increased. As a result, it becomes possible to increase the reluctance torque of the permanent magnet 2 or to more smoothly perform the demagnetization or magnetization of the permanent magnet 2.

In addition, with the configuration, the permanent magnet 2 has the variable magnet 21A. By performing magnetization (or demagnetization) of the variable magnet 21A with a magnetizing stator, the magnetic force of the permanent magnet 2 as a whole can be changed. Accordingly, it becomes possible to operate the electric motor 100 as a variable magnetic force motor.

The first embodiment of the present disclosure has been described hereinbefore. It is possible to implement various changes and improvements in the configurations without departing from the gist of the present disclosure. For example, an example in which the permanent magnet 2 has the variable magnet 21A has been described in the first embodiment. However, it is also possible to adopt a configuration where the permanent magnet 2 does not have the variable magnet 21A and is integrally formed only by the fixed magnet 21B.

### [Second Embodiment]

Next, a second embodiment of the present disclosure will be described with reference to Fig. 3. The same configurations as those of the first embodiment will be assigned with the same reference signs, and detailed description thereof will be omitted. As shown in Fig. 3, in the present embodiment, a protrusion portion 11P is provided on an outer peripheral surface 11S of the rotor core 11. The protrusion portion 11P is provided at a portion of the outer peripheral surface 11S corresponding to the permanent magnet 2 in the circumferential direction. The protrusion portion 11P has a curvature radius smaller than those of other portions of the outer peripheral surface 11S and protrudes in an arc shape toward the radial outer side. A plurality of such protrusion portions 11P are formed at equal intervals over the entire periphery of the outer peripheral surface 11S.

With the configuration, harmonic magnetic flux can be reduced while maintaining magnetic flux in the d-axis direction. As a result, torque fluctuations (torque ripple) and noise based on the torque fluctuations can be further reduced.

The second embodiment of the present disclosure has been described hereinbefore. It is possible to implement various changes and improvements in the configurations without departing from the gist of the present disclosure.

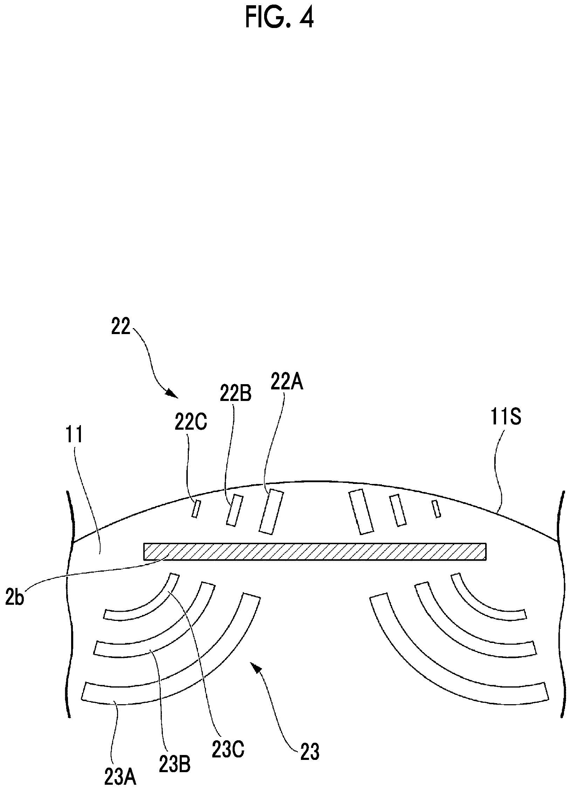

It is also possible to adopt a configuration shown in Fig. 4 as a modification example common to the respective embodiments. Fig. 4 shows an example in which one plate-shaped magnet is used as a permanent magnet 2b. Even in such a configuration, it is possible to obtain the same effects as in each of the embodiments described above.

### [Appendix]

The electric motor described in each of the embodiments is understood, for example, as follows.
(1) The electric motor 100 according to a first aspect includes the rotor core 11 that has a disk shape centered around the axis Ac, the plurality of permanent magnets 2 that are arranged in the circumferential direction inside the rotor core 11, and the stator 3 that surrounds the rotor core 11 and the permanent magnets 2 from the outer peripheral side. The plurality of outer slits 22 that extend in the directions in which the outer slits become closer to each other from both ends of the permanent magnets 2 in the circumferential direction toward the radial outer side are formed in the rotor core 11 on the outer peripheral side of the permanent magnet 2.

With the configuration, the plurality of outer slits 22 are formed in the rotor core 11 on the outer peripheral side of the permanent magnet 2. Further, the outer slits 22 extend in the directions in which the outer slits become closer to each other toward the radial outer side. Since the outer slit 22 is a gap, the magnetic resistance of the outer slit is larger than the magnetic resistance of the rotor core 11 itself. For this reason, magnetic flux generated by the permanent magnet 2 is guided in the direction in which the outer slit 22 extends while avoiding the outer slit 22. In other words, the magnetic flux is guided in the directions in which the outer slits become closer to each other toward the radial outer side. Accordingly, the magnetic flux can be converged toward the teeth 32 of the stator 3. As a result, leakage magnetic flux can be further reduced.

(2) In the electric motor 100 according to a second aspect, the closer to the central portion of the permanent magnet 2 in the circumferential direction, the larger the width of the outer slit 22 may become.

Herein, the direction along the magnetic field of the permanent magnet 2 is defined as the d-axis, and the direction orthogonal to the d-axis is defined as the q-axis. There is a demand for decreasing a magnetic resistance in the d-axis direction in order to increase reluctance torque. In the configuration, the closer an outer slit, among the plurality of outer slits 22, is positioned to the central portion of the permanent magnet 2 in the circumferential direction, the larger the width of the outer slit 22 becomes. In other words, a proportion occupied by the rotor core 11 itself decreases toward the central portion in the circumferential direction. Accordingly, the width of the magnetic path at the central portion in the circumferential direction can be decreased, and a magnetic resistance (that is, the magnetic resistance in the d-axis direction described above) can be further decreased. As a result, it becomes possible to increase the reluctance torque or to more smoothly perform the demagnetization or magnetization of the permanent magnet 2.

Further, since the width of the outer slit 22 is small on both end sides of the permanent magnet 2 in the circumferential direction, a proportion occupied by the rotor core 11 itself is large. Accordingly, the strength of the rotor core 11 can be ensured. In addition, by increasing a proportion occupied by the rotor core 11 itself as described above, magnetic saturation can be made unlikely to occur.

(3) In the electric motor 100 according to a third aspect, the permanent magnet 2 may have the pair of unit magnets 21 that extend in the directions in which the unit magnets are separated away from each other in the circumferential direction from the radial inner side to the radial outer side.

With the configuration, the pair of unit magnets 21 extend toward the radial outer side in the directions in which the unit magnets are separated away from each other in the circumferential direction. That is, each of the unit magnets 21 faces the central portion in the circumferential direction. For this reason, the direction in which the outer slit 22 extends and the direction of magnetic flux generated by the unit magnets 21 can be brought closer to each other. As a result, leakage magnetic flux can be further reduced.

(4) In the electric motor 100 according to a fourth aspect, the plurality of outer slits 22 may linearly extend in the direction orthogonal to the outer surface of the unit magnet 21.

With the configuration, the outer slits 22 extend linearly in the direction orthogonal to the outer surface of the unit magnet 21. That is, the direction of magnetic flux generated by the unit magnets 21 and the direction in which the outer slit 22 extends can be brought even closer to each other. As a result, leakage magnetic flux can be further reduced effectively.

(5) In the electric motor 100 according to a fifth aspect, the plurality of inner slits 23 that linearly extend from one permanent magnet 2, among the pair of permanent magnets 2 adjacent to each other in the circumferential direction, toward the other permanent magnet 2 are formed in a curved shape in the rotor core 11 on the inner peripheral side of the permanent magnet 2, and the closer to the radial outer side, the smaller the width of the inner slit 23 may become.

Herein, the direction along the magnetic field of the permanent magnet 2 is defined as the d-axis, and the direction orthogonal to the d-axis is defined as the q-axis. There is a demand for decreasing a magnetic resistance in the d-axis direction and increasing a magnetic resistance in the q-axis in order to increase reluctance torque. With the configuration, the closer the inner slit 23, among the plurality of inner slits 23, is positioned to the radial outer side, the smaller the width becomes. Accordingly, a magnetic resistance in the q-axis direction can be increased. As a result, it becomes possible to increase the reluctance torque of the permanent magnet 2 or to more smoothly perform the demagnetization or magnetization of the permanent magnet 2.

(6) In the electric motor 100 according to a sixth aspect, the portion that is the outer peripheral surface 11S of the rotor core 11 and that corresponds to the permanent magnet 2 in the circumferential direction may have a curvature radius smaller than those of other portions of the outer peripheral surface 11S of the rotor core 11 and may protrude toward the radial outer side.

With the configuration, the portion that is the outer peripheral surface 11S of the rotor core 11 and that corresponds to the permanent magnet 2 in the circumferential direction has a curvature radius smaller than those of other portions and protrudes toward the radial outer side. Accordingly, harmonic magnetic flux can be reduced while maintaining magnetic flux in the d-axis direction. As a result, torque fluctuations (torque ripple) and noise based on the torque fluctuations can be further reduced.

(7) In the electric motor 100 according to a seventh aspect, the permanent magnet 2 may have the variable magnet 21A that can change a magnetic force through magnetization or demagnetization and the fixed magnet 21B that is provided on the radial outer side of the variable magnet 21A and that has a constant magnetic force.

With the configuration, the permanent magnet 2 has the variable magnet 21A. By performing magnetization (or demagnetization) of the variable magnet 21A with the magnetizing stator, the magnetic force of the permanent magnet 2 as a whole can be changed. Accordingly, it becomes possible to operate the electric motor 100 as a variable magnetic force motor.

### Industrial Applicability

With the present disclosure, an electric motor with further improved torque and efficiency can be provided. Reference Signs List

100: electric motor
1: rotor
2, 2b: permanent magnet
3: stator
11: rotor core
11P: protrusion portion
11S: outer peripheral surface
21: unit magnet
22: outer slit
22A: first outer slit
22B: second outer slit
22C: third outer slit
23: inner slit
23A: first inner slit
23B: second inner slit
23C: third inner slit
31: back yoke
32: teeth
33: coil
34: tip of teeth
Ac: axis

## Claims

1. An electric motor comprising:
a rotor core that has a disk shape centered around an axis;
a plurality of permanent magnets that are arranged in a circumferential direction inside the rotor core; and
a stator that surrounds the rotor core and the permanent magnets from an outer peripheral side,
wherein a plurality of outer slits that extend in directions in which the outer slits become closer to each other from both ends of the permanent magnets in the circumferential direction toward a radial outer side are formed in the rotor core on the outer peripheral side of the permanent magnet.

2. The electric motor according to claim 1,
wherein the closer to a central portion of the permanent magnets in the circumferential direction, the larger widths of the outer slits become.

3. The electric motor according to claim 1 or 2,
wherein the permanent magnets have a pair of unit magnets that extend in directions in which the unit magnets are separated away from each other in the circumferential direction from a radial inner side to the radial outer side.

4. The electric motor according to claim 3,
wherein the plurality of outer slits linearly extend in a direction orthogonal to outer surfaces of the unit magnets.

5. The electric motor according to any one of claims 1 to 4,
wherein a plurality of inner slits that extend in a curved shape from one permanent magnet, among a pair of permanent magnets adjacent to each other in the circumferential direction, toward the other permanent magnet are formed in the rotor core on an inner peripheral side of the permanent magnet, and
the closer to the radial outer side, the smaller a widths of the inner slits become.

6. The electric motor according to any one of claims 1 to 5,
wherein a portion that is an outer peripheral surface of the rotor core and that corresponds to the permanent magnets in the circumferential direction has a curvature radius smaller than curvature radii of other portions of the outer peripheral surface of the rotor core and protrudes toward the radial outer side.

7. The electric motor according to any one of claims 1 to 6,
wherein the permanent magnets have
a variable magnet that is capable of changing a magnetic force through magnetization or demagnetization, and
a fixed magnet that is provided on a radial outer side of the variable magnet and that has a constant magnetic force.
